# EUROPÄISCHE PATENTSCHRIFT

(11) **EP 1 221 213 B1**
(45) Veröffentlichungstag und Bekanntmachung des Hinweises auf die Patenterteilung: **09.07.2003**
(21) Anmeldenummer: 00964105.1
(22) Anmeldetag: 04.09.2000
(51) Int. Cl.: H04B 17/00

(54) **VERFAHREN ZUM ERZEUGEN EINES PRÜFSIGNALS MIT VORBESTIMMTEM SIGNAL/RAUSCH-VERHÄLTNIS AUF EINER FREI WÄHLBAREN AUSGANGSFREQUENZ**
METHOD FOR PRODUCING A TEST SIGNAL WITH A PREDETERMINED SIGNAL-TO-NOISE RATIO ON A FREELY SELECTABLE OUTPUT FREQUENCY
PROCEDE DE PRODUCTION D'UN SIGNAL D'ESSAI AVEC UN RAPPORT SIGNAL/BRUIT PREDETERMINE SUR UNE FREQUENCE DE SORTIE POUVANT ETRE SELECTIONNEE LIBREMENT

(30) Priorität: 14.10.1999 DE 19949632
(43) Veröffentlichungstag der Anmeldung: 10.07.2002
(73) Patentinhaber: Rohde & Schwarz GmbH & Co. KG, D-81671 München (DE)
(72) Erfinder: KRETSCHMER, Erhard, 82054 Sauerlach (DE); MIESLINGER, Johann, 84034 Landshut (DE); KLEINE, Gregor, 82515 Wolfratshausen (DE)
(74) Vertreter: Körfer, Thomas, Dipl.-Phys.
(86) Internationale Anmeldenummer: EP0008622
(87) Internationale Veröffentlichungsnummer: WO01028139

(56) Entgegenhaltungen:
- US-A- 3 875 328
- US-A- 4 300 233
- US-A- 5 465 050

## Beschreibung

Die Erfindung betrifft ein Verfahren und eine Anordnung zum Erzeugen eines Prüfsignals mit vorbestimmtem Signal/Rausch-Verhältnis und beliebig wählbarer Ausgangsfrequenz zum Vermessen von Übertragungssystemen mit unterschiedlich benutzbaren Signalbandbreiten.

Bei digitalen Fernseh-Signalen kommen heute im Bereich von Kabel-, Terrestrik- und Satelliten-Übertragungssystemen die unterschiedlichsten Modulationsformate zum Einsatz, die aufgrund der vielfältigen Symbolraten der Digitalsignale unterschiedliche Signalbandbreiten aufweisen. Es gibt Übertragungssysteme, die mit Signalbandbreiten von z.B. 4 MHz, 6 MHz, 8 MHz oder 27 MHz benutzt werden können. Zum Vermessen von solchen Übertragungssystemen sind Prüfsignale erforderlich, die definiert verrauscht sind, also ein definiertes Signal/Rausch-Verhältnis C/N (C = Carrier, N = Noise) in Dezibel (dB) aufweisen, und die in einem vorgegebenen Frequenzbereich beliebig plazierbar sind. Prüfsignale dieser Art wurden bisher aus getrennt erzeugten modulierten Nutzsignalen und Rauschsignalen zusammengesetzt. Das daraus berechnete Signal/Rauschverhältnis ist mit den Fehlern der beiden Signale behaftet, die Messungen mit solchen in bekannter Weise erzeugten Prüfsignalen sind deshalb ungenau.

Es ist Aufgabe der Erfindung, ein einfacheres und für die Praxis besser geeignetes Verfahren zum Erzeugen solcher Prüfsignale und eine einfache Anordnung zum Ausführen eines solchen Verfahrens aufzuzeigen.

Diese Aufgabe wird ausgehend von einem Verfahren laut Oberbegriff des Hauptanspruches durch dessen kennzeichnende Merkmale gelöst. Vorteilhafte Weiterbildungen insbesondere auch bezüglich einer einfachen Anordnung zum Ausführen eines solchen Verfahrens ergeben sich aus den Unteransprüchen.

Nach dem erfindungsgemäßen Verfahren kann auf einfache Weise ein exakt kalibriertes C/N-Prüfsignal (C/N = 0 dB) auf einer frei wählbaren Ausgangsfrequenz erzeugt werden und mit einer einfachen Eichleitung kann nur durch entsprechende Abschwächung des Rauschsignals davon dann das gewünschte Prüfsignal mit dem gewünschten vorbestimmten Signal/Rausch-Verhältnis von beispielsweise 20 dB abgeleitet werden. Schaltungstechnisch kann dieses Verfahren mit einfachen Mitteln realisiert werden, besonders vorteilhaft ist es, die Kalibrierung auf gleichgroßen Pegel automatisch mit einer entsprechenden Regelanordnung durchzuführen, so daß die Kalibrierung auch während des Betriebes ständig wiederholt wird und eventuelle Temperatureinflüsse oder Streuungen des Nutzsignals bzw. des Rauschsignals automatisch korrigiert werden. Als besonders vorteilhaft hat es sich erwiesen, das Nutzsignal durch Modulation der Trägerfrequenz eines Lokaloszillators zu erzeugen und mit dieser gleichen Trägerfrequenz vor dem Pegelvergleich sowohl das Nutzsignal als auch das Rauschsignal ins Basisband rückzumischen, so daß unabhängig von der eingestellten Trägerfrequenz des Nutzsignals der Pegelvergleich und die Pegelregelung auf der konstanten Ausgangsfrequenz des Rückmischers erfolgt.

Die Erfindung wird im Folgenden anhand einer schematischen Zeichnung an einem Ausführungsbeispiel näher erläutert.

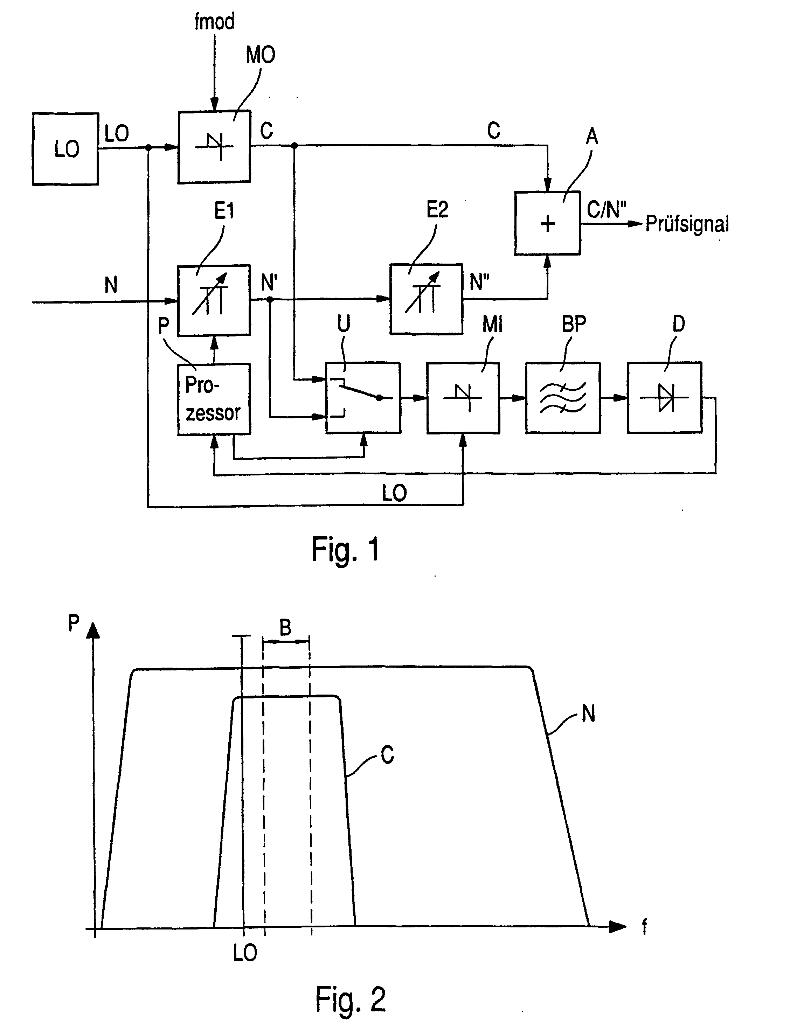

Figur 1 zeigt das Prinzipschaltbild einer Anordnung zum automatischen Erzeugen eines Prüfsignals mit vorbestimmtem Signal/Rausch-Verhältnis C/N in dB, wie es zum Vermessen von TV-Übertragungssystemen mit unterschiedlich benutzbaren Signalbandbreiten benötigt wird. Das Nutzsignal C wird in einem Modulator MO aus dem Trägerfrequenzsignal eines Lokaloszillators LO und einem Modulationssignal f_{mod} erzeugt, der Lokaloszillator LO ist auf beliebige Trägerfrequenzen einstellbar, der Modulator MO ist beispielsweise ein üblicher IQ-Modulator. Das Rauschsignal N liefert eine nicht dargestellte Rauschquelle. In dem gezeigten Ausführungsbeispiel wird das Rauschsignal N einer einstellbaren Eichleitung E1 zugeführt, in analoger Weise könnte diese Eichleitung E1 auch dem Nutzsignal C zugeordnet sein. Das im Pegel reduzierte Ausgangssignal N' und das modulierte Nutzsignal C werden über einen Umschalter U einem Pegeldetektor D zugeführt. Der Umschalter U wird über einen Prozessor P so gesteuert, daß abwechselnd das Nutzsignal C und das Rauschsignal N' über einen Mischer MI und einen Bandpaß BP dem Pegeldetektor D zugeführt wird. Im Mischer MI wird die Trägerfrequenz des Lokaloszillators LO zugeführt, so daß sowohl das Nutzsignal C als auch das Rauschsignal N' aus beliebiger Frequenzlage jeweils in eine feste Zwischenfrequenz, vorzugsweise ins Basisband, zurückgemischt werden. Der Bandpaß BP ist auf eine feste Durchlaßfrequenz abgestimmt, seine Bandbreite B ist auf die kleinste benutzbare Signalbandbreite des Systems abgestimmt, so daß gemäß Figur 2 sowohl das Rauschsignal N als auch das Nutzsignal C nur innerhalb dieser Meßbandbreite B gemessen werden (bei der Rückmischung ins Basisband wird die Trägerfrequenz LO in Figur 2 zu Null). Die so innerhalb der Bandbreite B gemessenen Pegel von Nutzsignal C und Rauschsignal N' werden im Prozessor P miteinander verglichen und über den Prozessor P wird die Eichleitung E1 so eingestellt, daß C und N' in einem vorbestimmten Verhältnis zueinander stehen, vorzugsweise im Verhältnis 1, so daß also beide Pegel gleich groß sind. Das geregelte Rauschsignal N' wird einer zweiten Eichleitung E2 zugeführt, die auf ein vorbestimmtes gewünschtes Verhältnis C/N einstellbar ist. Das um dieses gewünschte Verhältnis reduzierte Rauschsignal N" wird in einem Addierer A dem Nutzsignal C hinzuaddiert, das Ausgangssignal des Addierers A ist dann das gewünschte Prüfsignal mit dem vorbestimmten Signal/Rauschverhältnis. Die Bandbreite B des Bandpasses BP ist vorzugsweise umschaltbar und so auf die Signalbandbreiten einstellbar.

Bei der in Figur 1 dargestellten Anordnung des Umschalters U vor dem Addierer A erfolgt die Kalibrierung automatisch während des Betriebes ohne Unterbrechung des erzeugten Prüfsignals. In manchen Fällen kann es vorteilhaft sein, während der Kalibrierung die Erzeugung des Prüfsignals zu unterbrechen, beispielsweise dann, wenn durch die Kalibrierung auch eventuelle Fehler der zweiten Eichleitung E2 oder des Addierers A mit erfaßt werden sollen. In diesem Fall wird das Ausgangssignal des Addierers A unmittelbar dem Eingang des Rückmischers MI zugeführt und über einen Wechselschalter im Nutzsignalpfad C und Rauschsignalpfad N wird abwechselnd nur das Nutzsignal C und nur das Nutzsignal N" dem Addierer zugeführt, deren Pegel dann wieder wie oben beschrieben im Pegeldetektor D miteinander verglichen werden. Die Eichleitung E2 muß in diesem Fall auf ein Teilungsverhältnis 1 eingestellt werden. In manchen Fällen kann es vorteilhaft sein, diese beiden Betriebsmöglichkeiten in einem Gerät gleichzeitig vorzusehen, so daß wahlweise eine Kalibrierung während des Betriebes oder mit Unterbrechung möglich ist.

## Patentansprüche

1. Verfahren zum Erzeugen eines Prüfsignals mit vorbestimmtem Signal/Rausch-Verhältnis auf einer frei wählbaren Ausgangsfrequenz zum Vermessen von Übertragungssystemen mit unterschiedlich benutzbaren Signalbandbreiten,
**dadurch gekennzeichnet,**
**daß** die Pegel eines modulierten Nutzsignals und eines Rauschsignals nach Rückmischung mit dem das Nutzsignal erzeugenden Trägersignal in einer Bandbreite, die gleich oder kleiner als die kleinste Signalbandbreite des zu vermessenden Übertragungssystems ist, gemessen und auf ein vorbestimmtes Verhältnis eingestellt werden und das gewünschte Signal/Rausch-Verhältnis durch Reduktion des Pegels des Rauschsignals eingestellt wird.

2. Verfahren nach Anspruch 1,
**dadurch gekennzeichnet,**
**daß** die Pegel von Nutzsignal und Rauschsignal gleich groß eingestellt werden.

3. Verfahren nach Anspruch 1 oder 2,
**dadurch gekennzeichnet,**
**daß** die Pegelreduktion des Rauschsignals mittels einer einstellbaren Eichleitung erfolgt.

4. Verfahren nach einem der vorhergehenden Ansprüche,
**dadurch gekennzeichnet,**
**daß** das modulierte Nutzsignal durch Modulation eines lokalen Trägersignals erzeugt wird und Nutzsignal und Rauschsignal vor der Pegelmessung mit dem lokalen Trägersignal auf eine Zwischenfrequenz, insbesondere das Basisband, rückgemischt werden.

5. Verfahren nach einem der vorhergehenden Ansprüche,
**dadurch gekennzeichnet,**
**daß** der Pegelvergleich und die Pegelverhältnisregelung mit oder ohne Unterbrechung der Prüfsignalerzeugung erfolgt.

6. Verfahren nach einem der vorhergehenden Ansprüche,
**dadurch gekennzeichnet,**
**daß** die Pegelverhältnisregelung durch Regelung des Rauschsignalpegels und/oder des Nutzsignalpegels erfolgt.

7. Verfahren nach einem der vorhergehenden Ansprüche,
**dadurch gekennzeichnet,**
**daß** die Pegelverhältnisregelung automatisch erfolgt.

8. Anordnung zum Ausführen eines Verfahrens nach einem der vorhergehenden Ansprüche,,
**gekennzeichnet, durch**
eine erste einstellbare Eichleitung (E1) der eingangsseitig das Rauschsignal (N) zugeführt wird und deren Ausgangssignal (N') über einen Umschalter (U) wechselweise mit dem modulierten Nutzsignal (C) einem Pegeldetektor (D) zugeführt wird, und diese erste Eichleitung (E1) über den Pegeldetektor (D) so gesteuert ist, daß der Pegel des Ausgangssignals (N') der ersten Eichleitung (E1) in einem vorbestimmten Verhältnis zum Pegel des Nutzsignales (C) steht,
sowie **durch** eine zweite einstellbare Eichleitung (E2), die mit dem Ausgang der ersten Eichleitung (E1) verbunden ist und die auf das gewünschte Signal/Rausch-Verhältnis (C/N) einstellbar ist und deren Ausgangssignal (N") dem Nutzsignal (C) hinzuaddiert wird.

9. Anordnung nach Anspruch 8,
**dadurch gekennzeichnet,**
**daß** das Nutzsignal (C) durch Modulation der Trägerfrequenz eines Lokaloszillators (LO) in einem Modulator (MO) erzeugt wird und zwischen Umschalter (U) und Pegeldetektor (D) ein mit der Frequenz des Lokaloszillators (LO) gespeister Rückmischer (MI) angeordnet ist.

10. Anordnung nach Anspruch 8 oder 9,
**dadurch gekennzeichnet,**
**daß** dem Pegeldetektor (D) ein fest frequentes Bandfilter (BP) vorgeschaltet ist, dessen Bandbreite (B) gleich oder kleiner als die kleinste Signalbandbreite des zu vermessenden Übertragungssystems gewählt ist.

## Claims

1. Method for generating a test signal with predetermined signal/noise ratio on a freely selectable output frequency for surveying transmission systems with differently usable signal bandwidths,
**characterized in that** the level of a modulated useful signal and of a noise signal after inverse mixing with the carrier signal generating the useful signal in a bandwidth that is smaller than or equal to the smallest signal bandwidth of the transmission system to be surveyed, are measured and set to a predetermined ratio and the desired signal/noise ratio is set by reduction of the level of the noise signal.

2. Method according to Claim 1, **characterized in that** the level of useful signal and noise signal are set to be equal.

3. Method according to Claim 1 or 2, **characterized in that** the reduction in the level of the noise signal is effected by means of an adjustable variable attenuator.

4. Method according to any one of the preceding claims, **characterized in that** the modulated useful signal is generated by modulation of a local carrier signal, and useful signal and noise signal are inverse mixed with the local carrier signal on an intermediate frequency, in particular the baseband, before the level measurement.

5. Method according to any one of the preceding claims, **characterized in that** the level comparison and regulation of the level ratio are effected with or without interruption of the test signal generation.

6. Method according to any one of the preceding claims, **characterized in that** the regulation of the level ratio is effected by regulating the noise signal level and/or the useful signal level.

7. Method according to any one of the preceding claims, **characterized in that** the level ratio is regulated automatically.

8. Arrangement for executing a method according to any one of the preceding claims, **characterized by** a first adjustable variable attenuator (E1), to whose input side the noise signal (N) is fed and whose output signal (N') is fed via a changeover switch (U) alternately with the modulated useful signal (C) to a level detector (D), and this first variable attenuator (E1) is controlled by the level detector (D) in such a way that the level of the output signal (N') of the first variable attenuator (E1) is in a predetermined ratio to the level of the useful signal (C),
as well as by a second adjustable variable attenuator (E2), which is connected to the output of the first variable attenuator (E1) and which can be set to the desired signal/noise ratio (C/N), and whose output signal (N'') is added to the useful signal (C).

9. Arrangement according to Claim 8, **characterized in that** the useful signal (C) is generated by modulation of the carrier frequency of a local oscillator (LO) in a modulator (MO), and an inverse mixer (MI) fed with the frequency of the local oscillator (LO) is arranged between the changeover switch (U) and the level detector (D).

10. Arrangement according to Claim 8 or 9, **characterized in that** preconnected to the level detector (D) is a fixed-frequency bandpass filter (BP), whose bandwidth (B) is chosen to be smaller than or equal to the smallest signal bandwidth of the transmission system to be surveyed.

## Revendications

1. Procédé pour produire un signal d'essai ou de test présentant un rapport signal/bruit prédéterminé à une fréquence de sortie pouvant être choisie librement, pour la mesure de systèmes de transmission comportant des largeurs de bande du signal utilisables différemment, **caractérisé en ce qu'**on mesure les niveaux d'un signal utile modulé et d'un signal de bruit après mélange inverse avec le signal de porteuse produisant le signal utile, dans une largeur de bande qui est égale ou inférieure à la plus petite largeur de bande de signal du système de transmission à mesurer et on le règle sur un rapport prédéterminé, et **en ce qu'**on règle le rapport signal/bruit désiré au moyen d'une réduction du niveau du signal de bruit.

2. Procédé selon la revendication 1, **caractérisé en ce qu'**on règle les niveaux du signal utile et du signal de bruit de manière qu'ils soient identiques.

3. Procédé selon la revendication 1 ou 2, **caractérisé en ce** la réduction du niveau du signal de bruit s'effectue à l'aide d'une ligne d'étalonnage réglable.

4. Procédé selon l'une des revendications précédentes, **caractérisé en ce qu'**on produit le signal utile modulé par modulation d'un signal local de porteuse et **en ce qu'**on applique un mélange inverse au signal utile et au signal de bruit avant la mesure du niveau avec un signal local de porteuse à une fréquence intermédiaire, notamment dans la bande de base.

5. Procédé selon l'une des revendications précédentes, **caractérisé en ce que** la comparaison des niveaux et le réglage du rapport des niveaux s'effectuent avec ou sans interruption de la production du signal de test.

6. Procédé selon l'une des revendications précédentes, **caractérisé en ce que** la régulation du rapport des niveaux s'effectue au moyen de la régulation du rapport du niveau du signal de bruit et/du niveau du signal utile.

7. Procédé selon l'une des revendications précédentes, **caractérisé en ce que** la régulation du rapport des niveaux s'effectue automatiquement.

8. Dispositif pour la mise en oeuvre d'un procédé selon l'une des revendications précédentes, **caractérisé par** une première ligne d'étalonnage réglable (E1), au côté entrée de laquelle est envoyé le signal de bruit (N) et dont le signal de sortie (N') est envoyé, alternativement avec le signal utile modulé (C), au moyen d'un commutateur U à un détecteur de niveau (D) et par le fait que cette première ligne d'étalonnage (E1) est commandée au moyen du détecteur de niveau (D) de telle sorte que le niveau du signal de sortie (N') de la première ligne d'étalonnage (E1) se situe dans un rapport prédéterminé par rapport au niveau du signal utile (C),
ainsi que par une seconde ligne d'étalonnage réglable (E2), qui est reliée à la sortie de la première ligne d'étalonnage (E1) et qui est réglable sur le rapport signal/bruit désiré (C/N) et dont le signal de sortie (N") est ajouté au signal utile (C).

9. Dispositif selon la revendication 8, **caractérisé en ce que** le signal utile (C) est produit par modulation de la fréquence porteuse d'un oscillateur local (LO) dans un modulateur (MO) et **en ce qu'**un mélangeur inverse (MI) alimenté avec la fréquence de l'oscillateur (LO) est disposé entre le commutateur (U) et le détecteur de niveau (D).

10. Dispositif selon la revendication 8 ou 9, **caractérisé en ce qu'**en amont du détecteur de niveau (D) est monté un filtre passe-bande à fréquence fixe (BP), dont la largeur de bande (B) est égale ou inférieure à la largeur de bande minimale du signal du système de transmission à mesurer.
